# EUROPÄISCHE PATENTANMELDUNG

(11) **EP 4 455 058 A1**
(43) Veröffentlichungstag der Anmeldung: **30.10.2024**
(21) Anmeldenummer: 24172159.6
(22) Anmeldetag: 24.04.2024
(51) Int. Cl.: B65G 1/137, B65G 21/10, B65G 21/14, B65G 47/61, B65G 47/64, B65G 65/00

(54) **KOMMISSIONIERANLAGE**

(30) Priorität: 25.04.2023 CH 4302023
(71) Anmelder: FERAG AG, 8340 Hinwil (CH)
(72) Erfinder: Fenile, Roberto, 8340 HInwil (CH)
(74) Vertreter: Rentsch Partner AG

(57) **Zusammenfassung**

Die vorliegende Offenbarung betrifft eine Kommissionieranlage zum Transport und dem Verteilen von Stückgütern. Diese umfasst eine Anfördervorrichtung umfassend einen Hängeförderer zum Anfördern der Stückgüter sowie eine Abgabestation zum Abgeben der Stückgüter vom Hängeförderer an eine Abfördervorrichtung zum Abfördern der angeförderten Stückgüter, die einen ersten Förderer und einen zweiten Förderer umfasst, wobei an einer Verteilstelle der erste Förderer in einer oberen Ebene und der zweite Förderer in einer unteren Ebene angeordnet ist, wobei die Stückgüter an den ersten Förderer übergebbar und in einer ersten Förderrichtung abförderbar oder an den zweiten Förderer übergebbar und in einer zweiten Förderrichtung abförderbar sind.

## Beschreibung

### GEBIET DER ERFINDUNG

Die vorliegende Erfindung betrifft eine Vorrichtung sowie ein Verfahren zum Transport von Stückgütern und deren Verteilung an einer Verteilstelle.

### HINTERGRUND DER ERFINDUNG

Aus dem Stand der Technik ist unter anderem die DE102021207911 bekannt, welche am 26. Januar 2023 im Namen der Dürkopp Fördertechnik GmbH veröffentlicht wurde und auf eine Vorrichtung zum automatischen Entladen einer hängend geförderten Transporttasche gerichtet ist. Die Vorrichtung umfasst neben einer Zuführstrecke zum Zuführen der Transporttasche in eine Entladeposition eine Entladeeinheit zum automatischen Entladen der Transporttasche in der Entladeposition.

Aus dem Stand der Technik ist ferner die DE102018209266 bekannt, welche am 12. Dezember 2019 ebenfalls im Namen der Dürkopp Fördertechnik GmbH veröffentlicht wurde und auf eine Vorrichtung zum auftragsorientierten Bereitstellen von Einzelwaren mehrerer Aufträge an einem Packplatz einer Hängeförderanlage gerichtet ist. Die Vorrichtung umfasst eine Förderbahn mit einer Fördervorrichtung zum hängenden Fördern der Einzelwaren, einer Entladestation zum Entladen der Einzelwaren, einer Zuführöffnung zum Zuführen der Einzelwaren und eine mit der Zuführöffnung fördertechnisch verbundene Abgabeöffnung zum Bereitstellen von Einzelwaren eines ersten Auftrags am Packplatz, sowie einen Parkbereich zum Parken von Einzelwaren eines zweiten Auftrags am Packplatz.

### DARSTELLUNG DER ERFINDUNG

Im Bereich der Kommissionierung von Waren, insbesondere von Stückgut beispielsweise in der Form von Päckchen oder Paketen, wird zwischen Business to Business (B2B) und Business to Customer (B2C) Kommissionierungen unterschieden, da der zugrundeliegende Fulfillment-Prozess abweicht.

Der Fulfillment-Prozess, auch als Auftragsabwicklung oder Bestellabwicklung bezeichnet, umfasst alle Schritte die notwendig sind um eine Bestellung von der Auftragsannahme bis zur Auslieferung an den Kunden abzuschliessen. Die Kommissionierschritte zwischen Wareneingang, umfassend die Zwischenlagerung der Waren, die Kommissionierung der Waren zu Warengruppen (auch Batches genannt), die Verpackung der Einzelwaren oder Warengruppen für den Versand, werden üblicherweise in zusammenhängenden Logistikanlagen abgewickelt.

Die bedeutendsten Unterschiede zwischen B2B und B2C Fulfillment-Prozessen bestehen hierbei insbesondere darin, dass sich B2B Fulfillment-Dienstleistungen auf den Versand zwischen Unternehmen, insbesondere bei der Abwicklung grosser und umfangreicher Aufträge, wie der Lieferung von Warengruppen an Gross- und/oder Einzelhändler konzentrieren. Der Fulfillment-Dienstleister fungiert dabei als Zwischenposition zwischen den Produzenten und den einzelnen Grosskunden.

Im Gegenzug hierzu befassen sich B2C Fulfillment-Dienstleistungen hauptsächlich mit Warensendungen an Endkunden. B2C Fulfillment konzentriert sich auf eine schnelle und transparente Lieferung, um Waren möglichst schnell ab dem Bestelleingang zum Kunden schaffen zu können, teilweise noch per Versand am gleichen Tag. Ein bedeutender Unterschied liegt folglich sowohl in der Bestellmenge, die im B2B-Fulfillment erheblich höher ist als auch der Anforderung an die Geschwindigkeit der Kommissionierung, insbesondere im B2C-Fulfillment.

Die Versandfrequenz ist somit ein wichtiger Unterschied zwischen den beiden Arten des Fulfillments. Im B2B-Bereich gibt es weniger Bestellungen aber hierfür mit grossem Volumen, da Unternehmen Produkte in grossen Stückzahlen erwerben, während es im B2C viele Einzelbestellungen mit Einzelabgaben der Waren oder kleinen Volumen und kleinen Stückzahlen gibt, die zudem auch noch saisonbedingt hohe Fluktuationen aufweisen können.

Aufgrund des grossen Platzbedarfs und der enormen Investitionskosten von Logistikanlagen und den darin enthaltenen Kommissionieranlagen ist es trotz der unterschiedlichen Anforderungen erstrebenswert in ein und derselben Logistikanlage mit ein und denselben Kommissionieranlagen wahlweise sowohl B2B als auch B2C-Kommisionieraufträge abwickeln zu können.

Eine Aufgabe der Erfindung kann daher darin gesehen werden, das Transportieren und insbesondere das Verteilen von Stückgütern zu vereinfachen und insbesondere effizienter zu gestalten.

Diese Aufgabe wird durch die erfindungsgemässe Kommissionieranlage zum Transport und dem Verteilen von Stückgütern gelöst. Eine erfindungsgemässe Kommissionieranlage umfasst typischerweise mindestens eine Anfördervorrichtung zum Anfördern der Stückgüter und eine, vorzugsweise stromabwärts der Anfördervorrichtung angeordnete, Abfördervorrichtung. Die Kommissionieranlage kann hierbei Teil einer übergeordneten Logistikanalage sein. Die Waren in Form von Stückgütern werden daher typischerweise von einer stromaufwärts der Anfördervorrichtung gelegenen Vorrichtung angeliefert und von der Abfördervorrichtung an eine stromabwärts der Kommissionieranlage gelegene Vorrichtung weitertransportiert oder ggf. daran anschliessend für den Versand verpackt.

Die Anfördervorrichtung umfasst einen Hängeförderer zum Anfördern der Stückgüter sowie eine Abgabestation zum Abgeben der Stückgüter vom Hängeförderer an die Abfördervorrichtung zum Abfördern der angeförderten Stückgüter. Die Abfördervorrichtung umfasst einen ersten Förderer und einen zweiten Förderer, wobei an einer Verteilstelle der erste Förderer in einer oberen Ebene und der zweite Förderer in einer unteren Ebene angeordnet ist.

Die Stückgüter sind an den ersten Förderer übergebbar und in einer ersten Förderrichtung abförderbar oder an den zweiten Förderer übergebbar und in einer zweiten Förderrichtung abförderbar.

Die Anfördervorrichtung zum Anfördern der Stückgüter umfasst vorzugsweise einen Anförderer, der in Anförderrichtung stromabwärts der Abgabestation angeordnet ist. Der Anförderer kann im einfachsten Fall als umlaufender Bandförderer ausgeführt sein. Auch Rollen-, Platten-, Schalen- oder Kettenförderer, bevorzugt Hängeförderer sind möglich.

Der Anförderer kann mittels einer Steuerung derart gesteuert werden, dass die Stückgüter beabstandet und taktgenau an die Abfördervorrichtung übergebbar sind. Auch kann die Anfördervorrichtung eine Messvorrichtung zum Messen der Abmessungen und/oder des Gewichts der Stückgüter aufweisen um die Stückgüter, die die Mindestabmessungen und/oder ein Soll-Gewicht unter- oder überschreiten detektieren und aussortieren zu können.

In einer bevorzugten Ausführungsvariante umfasst die Kommissionieranlage mindestens einen Hängeförderer, mittels dem die Stückgüter in Hängetaschen hängend förderbar sind. Die Stückgüter werden dabei in Hängetaschen hängend an die Anfördervorrichtung angeliefert und mittels der Abgabestation entleert und an die stromabwärts gelegene Abfördervorrichtung übergeben. Der Hängeförderer umfasst hierbei typischerweise mindestens eine Schiene, an der die Hängetaschen mittels Laufwagen hängend förderbar sind.

Die Hängetaschen können eine Rückwand und eine Vorderwand umfassen, die über einen Bodenabschnitt derart flexibel miteinander verbunden sind, dass sie zwischen einem ersten Zustand, in welchem sie eine offene und befüllbare Tasche bilden, und einem zweiten Zustand, in welchem sie dicht nebeneinander liegen und eine zusammengefaltete Tasche bilden, hin und her bewegbar sind.

Der Hängeförderer kann an die Anfördervorrichtung anschliessen, die vorzugsweise eine Abgabestation in Form einer Entleerungsvorrichtung umfasst. Der Hängeförderer oder auch mehrere Hängeförderer können hierbei die Anfördervorrichtung mit stromaufwärts angeordneten Vorrichtungen verbinden. Mittels des Hängeförderers kann die Anlieferung mit dem Abtransport verbunden und hierdurch der Warenfluss innerhalb der Logistikanlage hergestellt werden.

Die Entleerungsvorrichtung kann eine erste Vorrichtung zum automatischen Öffnen und Schliessen der Hängetasche, sowie eine zweite Vorrichtung zum Aufklappen der geöffneten Hängetasche umfassen.

Die erste Vorrichtung kann in einer Ausgestaltung einen Aus- und Einhakmechanismus aufweisen, welcher ein in vertikaler Richtung verfahrbares Eingriffselement umfasst, das mit einem an der Hängetasche angebrachten Griffelement in Eingriff bringbar ist. Das Griffelement kann insbesondere stangenartig ausgebildet sein und insbesondere durch eine Querstange der Hängetasche selbst gebildet werden.

Zusätzlich kann eine Rutsche vorgesehen sein, welche an einem oberen Ende an den Hängeförderer und an einem unteren Ende an einen Anförderer anschliesst, wobei die Rutsche mit ihrem unteren Ende an den Anförderer zum Wegtransportieren des entleerten Stückguts anschliesst.

In der Kommissionieranlage können auch Entleerungsvorrichtungen verwendet werden, wie sie in der WO2016120032 der Anmelderin auf der Seite 6 offenbart werden.

Alternativ kann die Entleerungsvorrichtung ein umlaufendes Förderband zur Übernahme von in den Hängetaschen transportierten Stückgütern umfassen. An einem Kontaktabschnitt kann der Förderweg des Hängeförderers und der Förderweg des Förderbands derart zueinander angeordnet sein, dass der Abstand des Förderwegs des Hängeförderers und des Förderwegs des Förderbands kontinuierlich kleiner wird, so dass bei der Förderung einer Hängetasche entlang des Kontaktabschnitts eine Vorderseite der Hängetsche das Förderband kontaktiert und auf diesem zu liegen kommt und dabei die Hängetasche nach hinten geschwenkt wird.

In einem Übergabeabschnitt kann der Förderweg des Hängeförderers und der Förderweg des Förderbands im Wesentlichen parallel zueinander mit einem gewissen Gefälle nach unten verlaufen, wobei die Vorderseite der jeweiligen Hängetasche bei der Förderung entlang des Übergabeanschnitts weiterhin auf dem Förderband liegt, so dass die Öffnung der Hängetasche schräg nach unten orientiert ist und in der Hängetasche vorhandene Stückgüter aus der Tasche, vorzugsweise schwerkraftgetrieben, auf das Förderband gleiten.

In einem Trennabschnitt kann der Abstand des Förderwegs des Hängeförderers und des Förderwegs des Förderbands kontinuierlich grösser werden, so dass bei der Förderung einer Hängetasche entlang des Trennabschnitts die entleerte Hängetasche vom Förderband abgehoben wird und in die frei hängende Lage zurückschwenkt. Üblicherweise sind die Fördergeschwindigkeiten des Förderbandes und die des Hängeförderers gleich.

Das Förderband kann eine Mehrzahl von entlang einem Umfang des Förderbands gleichmässig beabstandet angeordneter, nach aussen gerichteter, transversaler Rippen aufweisen. Die relative Lage der Rippen und der Hängetaschen ist typischerweise zueinander so gewählt, dass im Kontaktabschnitt eine Rippe zur Hängetasche aufholt, den Bodenabschnitt der Hängetasche kontaktiert und diesen in Förderrichtung nach vorne schiebt, bis die Hängetasche in einen Zustand zum Entleeren übergegangen ist.

Der Abstand der Rippen kann so gewählt sein, dass während der Förderung einer Hängetasche entlang des Übergabeabschnitts in der Hängetasche vorhandene Stückgüter schwerkraftgetrieben aus der Tasche auf das Förderband gleiten und auf dem Förderband schwerkraftunterstützt weiter nach unten gleiten, bis sie von der der Hängetasche vorauslaufenden Rippe aufgefangen und gehalten werden. Die Rippen des Förderbandes können aus einer Vielzahl paralleler Finger bestehen.

Ein oberes Ende der Rutsche kann Schlitze aufweisen, deren Lage den Fingern der Rippen des Förderbandes entsprechen, so dass beim Umlenken des Förderbandes die Finger der Rippen und die Schlitze der Rutsche kämmend miteinander wechselwirken und jeweils hinter einer Rippe zurückgehaltene Stückgüter getaktet freigeben werden, die anschliessend auf der Rutsche schwerkraftgetrieben weiterbefördert werden. Ein weiterer Förderer kann die freigegebenen Stückguteinheiten von der Rutsche übernehmen.

Zudem können Vibrationsmittel vorgesehen sein, mit welchen mindestens in einem Teilabschnitt des Förderbands die Oberfläche des Förderbands in Vibrationen oder Schwingungen versetzt werden kann.

In der Kommissionieranlage können auch Entleerungsvorrichtungen verwendet werden, wie sie in der WO2018142243 der Anmelderin in den Patentansprüchen 1 bis 14 offenbart werden.

Die Hängetaschen können mittels der Abgabestation entleerbar sein und das Stückgut entweder direkt an die Abfördervorrichtung oder an den Anförderer und mittels des Anförderers an die Abfördervorrichtung übergebbar sein. Der Anförderer kann im Stop-and-Go Betrieb betreibbar sein um das jeweilige Stückgut taktgenau an die Abfördervorrichtung übergeben zu können.

Mittels mindestens eines Stoppelements in der Abgabestation können die Hängetaschen angehalten werden und im angehaltenen Zustand entleert werden. Alternativ können die Hängetaschen schwerkraftgetrieben im bewegten Zustand entleerbar sein.

Hierzu kann die Abgabestation eine Rutsche umfassen, wobei die Stückgüter nach dem Entleeren schwerkraftgetrieben über die Rutsche, vorzugsweise an den Anförderer oder direkt an die Abfördervorrichtung zugeführt werden. Die Hängetasche kann über eine Öffnung entleer sein, welche Öffnung bezüglich einer Aufhängung der Hängetasche oben, seitlich oder unten an der jeweiligen Hängetasche angeordnet ist.

Die Abfördervorrichtung zum Abfördern der angeförderten Stückgüter umfasst mindestens einen ersten Förderer und mindestens einen zweiten Förderer, wobei an einer Verteilstelle der erste Förderer in einer oberen Ebene und der zweite Förderer in einer unteren Ebene angeordnet ist. Die Verteilstelle dient dabei typischerweise dem Aufteilen von Stückgütern oder Warengruppen.

Mittels der Abfördervorrichtung kann zwischen B2B und B2C Sendungen umgestellt werden. Der erste und der zweite Förderer müssen hierbei nicht gänzlich in einer Ebene verlaufen, ein als Bandförderer ausgeführter erster Förderer kann auch zur Überwindung eines Höhenunterschieds geneigt im Raum angeordnet sein.

Im Bereich der Verteilstelle ist der erste Förderer jedoch typischerweise zumindest bereichsweise in der oberen Ebene über dem zweiten Förderer in der unteren Ebene angeordnet, um in einem ersten Zustand die Stückgüter über den zweiten Förderer hinwegfördern zu können.

Der erste und/oder der zweite Förderer können als umlaufende Förderer, beispielsweise als Rollen-, Band-, Platten-, Ketten- oder Schalenförderer ausgeführt sein. Die Stückgüter sind von der Anfördervorrichtung entweder an den ersten Förderer übergebbar und in einer ersten Förderrichtung abförderbar oder an den zweiten Förderer übergebbar und in einer zweiten Förderrichtung abförderbar.

Alternativ können die Stückgüter von der Anfördervorrichtung an den ersten Förderer übergeben werden und an einer Verteilstelle vom ersten Förderer an den zweiten Förderer übergeben werden. Um die Stückgüter vom ersten an den zweiten Förderer übergeben zu können, kann der erste Förderer zumindest bereichsweise in der ersten Förderrichtung verfahrbar sein.

Typischerweise bedient der erste Förderer eine erste nachgelagerte Vorrichtung in Form einer Versandstation, die mehrere entlang eines Förderers seitlich angeordnete Versandplätze umfasst. B2C Stückgüter oder Warengruppen können mittels des ersten Förderers an die Versandplätze gefördert werden und dort für den jeweiligen Endkunden einzeln verpackt werden.

Der zweite Förderer bedient typischerweise eine zweite nachgelagerte Vorrichtung in Form einer weiteren Versandstation. B2B Stückgüter oder Warengruppen können mittels des zweiten Förderers an die weitere Versandstation gefördert werden und dort gesammelt in einem jeweiligen Transportbehältnis, beispielsweise einer Wanne, einer Kiste, einem Karton, einer Palette oder einem Sack als gesammelte Warensendung für einen Grossabnehmer bereitgestellt werden.

Die erste nachgelagerte Vorrichtung und die zweite nachgelagerte Vorrichtung können auch vertauscht angeordnet sein, sodass der erste Förderer die zweite nachgelagerte Vorrichtung und der zweite Förderer die erste nachgelagerte Vorrichtung bedient.

Die Abfördervorrichtung kann auch als Ausschleusevorrichtung verwendet werden, wobei Stückgut mittels der Messvorrichtung an der Anfördervorrichtung gemessen wird und Stückgut, dessen Abmessungen und/oder Gewicht die Mindestabmessungen und/oder ein Soll-Gewicht unter- oder überschreiten mittels des zweiten Förderers aussortierbar sein.

Der erste Förderer kann entlang der ersten Förderrichtung horizontal verfahrbar und/oder um die erste Förderrichtung vertikal verstellbar, vorzugsweise klappbar oder verschwenkbar, angeordnet sein.

In einem ersten Zustand kann der erste Förderer im Bereich der Verteilstelle den zweiten Förderer überdecken und in einem zweiten Zustand kann der erste Förderer im Bereich der Verteilstelle den zweiten Förderer freigeben.

Im zweiten Zustand wird der erste Förderer im Bereich der Verteilstelle typischerweise verfahren und gibt hierdurch den zweiten Förderer frei. Die Stückgüter können somit entweder direkt von der Anfördervorrichtung an den zweiten Förderer übergeben oder alternativ an den ersten Förderer und vom ersten Förderer an den zweiten Förderer übergeben werden.

Im ersten Zustand sind die Stückgüter typischerweise im Bereich der Verteilstelle an den ersten Förderer übergebbar und mittels des ersten Förderers abförderbar und an mindestens eine erste nachgelagerte Vorrichtung übergebbar.

Alternativ sind im zweiten Zustand die Stückgüter im Bereich der Verteilstelle an den zweiten Förderer oder vom ersten Förderer an den zweiten Förderer übergebbar und mittels des zweiten Förderers abförderbar und an mindestens eine zweite nachgelagerte Vorrichtung übergebbar. Die zweite Förderrichtung kann gegenläufig oder orthogonal zur ersten Förderrichtung verlaufen.

Der erste Förderer kann ein Teleskopband umfassen, welches entlang der ersten Förderrichtung um läuft und entlang der ersten Förderrichtung im Bereich der Verteilstelle verfahrbar angeordnet ist oder bezüglich der oberen Ebene vertikal verstellbar, vorzugsweise verklappbar, angeordnet ist.

Der erste Förderer kann alternativ zwei entlang der ersten Förderrichtung, vorzugsweise zueinander gegenläufig, umlaufende Querbänder umfassen, die jeweils in der ersten Förderrichtung verfahrbar angeordnet sind.

Die zwei in der ersten Förderrichtung umlaufenden Querbänder können entlang der ersten Förderrichtung bezüglich der zweiten Förderrichtung asymmetrisch verfahrbar angeordnet sein. Der zweite Förderer kann mindestens ein Querband umfassen, das gegenläufig oder orthogonal bezüglich der ersten Förderrichtung um läuft.

Der erste und/oder der zweite Förderer können beschleunig oder abbremsbar sein um die darauf liegenden Stückgüter zu beabstanden, sodass diese taktgenau an die erste oder zweite nachgelagerter Vorrichtung übergebbar sind. Die Taktlänge kann hierbei variiert oder eingestellt werden, daher in der Länge variieren sodass unterschiedliche Abstände eingehalten werden können. Je nach Kommissionier Auftrag können sich die Taktlängen unterscheiden.

Die Kommissionieranlage kann mindestens eine Versandstation umfassen, die mehrere entlang eines Förderers seitlich angeordnete Versandplätze umfasst und ein Stückgut kann vorzugsweise über Rampen an einen jeweiligen Versandplatz zuführbar sein.

Die von der Anfördervorrichtung angeförderten Stückgüter können jeweils in Transportbehältnisse übergebbar sein, welche mittels eines Rückförderers nach erfolgter Entleerung wieder zurück zur Anfördervorrichtung und/oder der zur Abfördervorrichtung transportierbar sind.

Typischerweise erfolgt die Rückförderung auf einer anderen Förderebene als die Anförderung, wobei der Rückförderer vorzugsweise vertikal versetzt zur Anförderung verläuft, vorzugsweise parallel. Die Kommissionieranlage kann ein Magazin umfassen, mittels dem die Transportbehältnisse, welche mittels des Rückförderers zurück zur Anfördervorrichtung und/oder zu der Abfördervorrichtung transportiert wurden, vertikal transportierbar sind, vorzugsweise mittels einer Hubeinrichtung.

Die Kommissionieranlage kann Teil einer Logistikanlage sein. Die Logistikanlage umfasst neben der Kommissionieranlage typischerweise noch eine Lagervorrichtung und/oder eine Sortiervorrichtung und/oder eine Speichervorrichtung.

Typischerweise werden die Stückgüter eingangsseitig der Logistikanlage angeliefert, beispielsweise mittels eines LKWs. Nach dem Entladen werden die Waren, typischerweise in Form von Stückgütern, durch die folgenden Bereiche der Logistikanlage transportiert: Anlieferung, Wareneingang, Lager, Verpacken und Etikettieren, Puffern, Speichern, Sortieren, Verteilen, Verpacken, Abtransport, welcher ebenfalls typischerweise wieder per LKW erfolgt.

Bevor die Stückgüter an die Anfördervorrichtung übergeben werden, durchlaufen diese in der Logistikanlage typischerweise mehrere vorgelagerte Arbeitsschritte und Stationen. Die Logistikanlage kann wenigstens eine Aufgabestation mit einer Mehrzahl von parallel angeordneten Aufgabeplätzen zur Aufgabe der zu kommissionierenden Waren in die Logistikanlage umfassen.

Zum Transport der Waren von den Aufgabeplätzen durch die Logistikanlage können diese mittels Hängetaschen transportiert werden. Zum Befüllen der Hängetaschen kann die Logistikanlage eine Vorrichtung zum Befüllen der Hängetaschen aufweisen.

Die Hängetaschen sind im unbefüllten Zustand bereits an dem Hängeförderer mittels Laufwagen in einer Wartestellung angeordnet. Die Laufwagen sind hierbei an einer Laufschiene in Laufschienenrichtung beweglich gelagert und die Hängetaschen jeweils nach unten hängend zur Aufnahme von Stückgutgut angeordnet.

Die Hängetaschen werden vorzugsweise jeweils durch wenigstens eine, im geöffneten Zustand ebene, flexible Materialbahn gebildet, welche mit den beiden Enden unter Ausbildung einer nach unten hängenden Tragschlaufe bzw. Transportschlaufe am Laufwagen befestigt ist, und wobei die Befestigung der Materialbahn am Laufwagen an wenigstens einem Ende der Materialbahn lösbar ausgebildet ist.

Die jeweilige Hängetasche wird im geschlossenen Zustand herangeführt, durch Lösen der Befestigung des wenigstens einen Endes der Materialbahn am Laufwagen wird die Hängetasche geöffnet, das Transportgut (Stückgut) wird in die geöffnete Hängetasche gefüllt, die Hängetasche durch Befestigen des wenigstens einen Endes der Materialbahn am Laufwagen geschlossen und die befüllte und geschlossene Hängetasche wird weggeführt.

Das Heranführen der Hängetasche kann über eine erste Laufschiene erfolgen, und das Wegführen der befüllten und geschlossenen Hängetasche über eine zweite Laufschiene, welche gegenüber der ersten Laufschiene versetzt angeordnet ist. Die Hängetasche kann mittels einer Befüllvorrichtung von der ersten Laufschiene zur zweiten Laufschiene transportiert werden, und es wird die Befüllung der Hängetasche während des Transports von der ersten Laufschiene zur zweiten Laufschiene in der Befüllvorrichtung vorgenommen.

Die Hängetasche kann dabei während des Transports in der Befüllvorrichtung an einem Laufschienenstück hängend transportiert werden, welches einem Abschnitt der Laufschiene entspricht und welches wahlweise an ein Ende der ersten Laufschiene bzw. der zweiten Laufschiene anschliessbar ist.

Alternativ kann das wenigstens eine Ende der Materialbahn durch Einhaken des einen Endes am Laufwagen lösbar ausgebildet sein, wobei im ersten Schritt das wenigstens eine Ende der Materialbahn ausgehakt wird, und im zweiten Schritt das wenigstens eine Ende der Materialbahn wieder eingehakt wird. Insbesondere ist dabei das andere Ende der Materialbahn mit dem Laufwagen fest verbunden.

An einem Ende der Materialbahn kann ein Griffelement angeordnet sein, wobei zum Aus- bzw. Einhaken der Materialbahn eine Aushakvorrichtung bzw. Einhakvorrichtung das wenigstens eine Ende der Materialbahn am Griffelement erfasst und anhebt bzw. absenkt.

Alternativ kann die bereits geöffnete Hängetasche offengehalten werden, indem die Materialbahn mit ihrem gelösten wenigstens einen Ende unter Ausbildung einer annähernd V-förmigen Öffnung zwischen den beiden Enden der Materialbahn auf einer schräg stehenden Stützfläche aufliegt und gestützt wird.

Die Befüllvorrichtung umfasst typischerweise eine erste Vorrichtung zum Öffnen der Hängetasche, eine zweite Vorrichtung zum Befüllen der geöffneten Hängetasche und eine dritte Vorrichtung zum Schliessen der befüllten Hängetasche, wobei die drei Vorrichtungen in einer Transportrichtung für die Hängetasche hintereinander und voneinander getrennt angeordnet sein können.

In der Logistikanlage können auch Befüllvorrichtungen und Verfahren zum Befüllen der Hängetaschen verwendet werden, wie sie in der WO2016120031 auf den Seiten 4 bis 6 offenbarten werden.

Alternativ kann eine Befüllvorrichtung vorgesehen werden, bei der zum Befüllen die Hängetaschen gedreht werden. Hierzu ist vorteilhaft eine Wirkanordnung vorgesehen, mit welcher die Transportelemente an einer bestimmten Stelle des Förderwegs um einen bestimmten Drehwinkel gedreht werden können, wobei typischerweise einAufhängehaken an der Aufhängung der Hängetasche von der ersten Position in eine zweite Position beziehungsweise von der zweiten Position in die erste Position überführbar ist.

Dabei erfolgt vorteilhaft die Umlagerung der Hängetaschen durch das Drehen der Hängetaschen selber, vorteilhaft um eine Mittelachse. Besonders vorteilhaft sind als Wirkanordnung eine Bürstenanordnung oder mechanische, elektrische, magnetische oder pneumatische Betätigungsmittel vorgesehen.

Alternativ kann bei dem Hängeförderer in einem bestimmten Abschnitt des Förderwegs der Traghaken der Hängetasche derart ausgerichtet sein, dass der Aufhängehaken der Hängetasche eine erste stabile Position einnimmt, und ist in einem bestimmten anderen Abschnitt der Traghaken der Fördereinheit derart ausgerichtet sein, dass der Aufhängehaken der Hängetasche eine zweite stabile Position einnimmt.

Besonders vorteilhaft kann dabei ein Überführen des Aufhängehakens von der ersten stabilen Position in die zweite stabile Position beziehungsweise von der zweiten stabilen Position in die erste stabile Position durch die Drehung der Hängetasche um die Förderrichtung beim Übergang zwischen dem bestimmten einen Abschnitt und dem bestimmten anderen Abschnitt des Förderwegs initiiert werden.

Es können weitere Öffnungsmittel vorgesehen sein, mit welchen eine Hängetasche an einer bestimmten Stelle des Förderwegs in den ersten geöffneten Zustand gebracht werden kann, wobei sich dabei der Aufhängehaken in der zweiten Position befindet und die Rückwand der Transporttasche im Wesentlichen parallel zur Förderrichtung orientiert ist.

Besonders vorteilhaft ist dabei als Öffnungsmittel eine Hebeanordnung vorgesehen, insbesondere ein Hebetisch oder eine Rampenanordnung. Das Öffnungsmittel kann auch als Rampe ausgestaltet sein, die so angeordnet ist, dass der Bodenabschnitt einer leeren Tasche bei der Förderung von der Rampe kontinuierlich angehoben wird, so dass die Transporttasche in den ersten, geöffneten Zustand übergeht.

In einer anderen vorteilhaften Ausführungsform eines solchen Fördersystems kann als Öffnungsmittel eine Öffnungsvorrichtung vorgesehen sein, umfassend eine Mehrzahl von gestaffelt angeordneten Förder- und Hebevorrichtungen mit einem unteren Rollenelement, so dass die unteren Rollenelemente der Öffnungsvorrichtung eine ansteigende Rampe bilden.

Die genannte Rollenrampe erlaubt es, beim Fördern einer leeren Hängetasche entlang des Förderpfads die untere Kante der Vorderwand anzuheben, so dass die Vorderwand als Ganzes angehoben wird und sich aufgrund der geometrisch vorgegebenen Wirkverbindung über Distanzhalterelemente und/oder Bodenabschnitt von der Rückwand wegbewegt, so dass sich die Öffnung der Tasche öffnet. In diese kann nun die Ladung, beispielsweise eine Stückguteinheit, eingebracht werden.

Besonders vorteilhaft können die Förder- und Hebevorrichtungen ein oberes Rollenelement aufweisen, so dass die unteren Rollenelemente und die oberen Rollenelemente der Öffnungsvorrichtung einen Förderkanal ausbilden.

Eine solche Ausführungsform bietet den Vorteil, dass die unteren Rollen zum einen die Vorderwand anheben können, und zum anderen zusammen mit den oberen Rollen einen Führungskanal für die Transporttaschen bilden, in welchem die Transporttaschen der Fördereinheiten zuverlässig einen reproduzierbaren Pfad einschlagen.

Die oberen Rollen können dabei einen Anschlag für die Vorderwand oder die Rückwand bilden, je nachdem wie die Transporttaschen in Bezug auf die Förder- und Hebeeinheiten orientiert sind, so dass die transversale Bewegung in Richtung der oberen Rollen begrenzt ist.

Zusätzlich oder alternativ können die unteren Rollenelemente und/oder die oberen Rollenelemente der Förder- und Hebeeinheiten aktiv angetrieben sein. Ein solcher aktiver Antrieb vermeidet oder reduziert eine unerwünschte Bremswirkung der Öffnungsvorrichtung auf die darin geförderten Transporttaschen der Fördereinheiten.

Vorteilhaft ist die Drehrichtung und die Drehgeschwindigkeit der Rollenelemente so auf die Fördergeschwindigkeit am Ort der entsprechenden Rollenelemente abgestimmt, dass die tangentiale Umfanggeschwindigkeit der Rollenelemente der longitudinalen Fördergeschwindigkeit entspricht. Dies bedeutet, dass die Transporttasche einer Fördereinheit von den Rollen gleich schnell und in gleicher Richtung wie der Laufwagen der Fördereinheit gefördert werden. Entsprechend ist ein Schwingen der Transporttaschen in longitudinaler Richtung nicht möglich, und die Lage der Tasche auch bei hohen Fördergeschwindigkeiten oder positiven und negativen Beschleunigungen stabilisiert.

In der Logistikanlage können auch Befüllvorrichtungen und Verfahren zum Befüllen der Hängetaschen verwendet werden, wie sie in der WO2018142242 der Anmelderin auf den Seiten 8 und 9 offenbarten werden.

Zum Speichern und Sortieren der Stückgüter innerhalb der Logistikanalage kann weiterhin ein Batchpuffer zur Bereitstellung von zu Batches zusammengestellten Warengruppen vorgesehen. Weiterhin kann die Logistikanalage einen oder mehrere Matrix- Sortierer zum batchweisen Sortieren der Waren umfassen. Eine Mehrzahl von Transporteinheiten welche jeweils eine Aufnahmeeinheit, vorzugsweise in Form einer Hängetasche umfassen, kann zur Aufnahme der Waren im Matrix-Sortierer vorgesehen sein. Ein matrix-Sortierer kann hierbei auch mehrere Sortierstufen aufweisen.

Falls der Matrix-Sortierer innerhalb der Logistikanlage stromabwärts des Batchpuffers und/oder der Befüllvorrichtung angeordnet ist, kann dieser die bereits befüllten Hängetaschen des Batchpuffers und/oder der Befüllvorrichtung übernehmen.

Der Matrix-Sortierer umfasst typischerweise mindestens einen Matrixförderer zum Fördern der Transporteinheiten, wobei die Logistikanlage eine Steuerung aufweist, welche ausgelegt ist, die Fördergeschwindigkeit des Matrixförderers dynamisch derart zu steuern, dass die Fördergeschwindigkeit von mindestens einem Parameter, beispielsweise Grösse und/oder Gewicht, der geförderten Transporteinheiten und/oder Waren abhängt.

Der Batchpuffer kann neben dem Matrix Förderer weitere Förderer, vorzugsweise Umlaufförderer, aufweisen, welche ausgelegt sind, die Transporteinheiten mit einer konstanten Fördergeschwindigkeit zu fördern.

Die Steuerung kann dazu ausgelegt sein, die Fördergeschwindigkeit des Matrixförderers derart zu steuern, dass die Fördergeschwindigkeit des Matrixförderers in mindestens einem Batch höher als die konstante Fördergeschwindigkeit der weiteren Förderer ist.

Der Umlaufförderer ist typischerweise dazu ausgelegt, die Transporteinheiten in einer Sortierstufe zu- und/oder von einer Sortierstufe wegzuführen. Eine Sortierstufe des Matrix-Sortierers kann eine Mehrzahl von linearen Pufferstrecken aufweisen, welche durch Weichen mit dem Matrixförderer verbunden sind.

Die Pufferstrecken sind vorzugsweise als Gravitationsstrecken mit einem Gefälle derart ausgebildet, dass die Transporteinheiten in den Gravitationsstrecken schwerkraftbedingt förderbar sind. Der Batchpuffer kann zudem eine Mehrzahl von linearen Speicherstrecken aufweisen, in welche vorzugsweise jeweils ein Batch oder zwei Batches einspeicherbar sind.

Vor dem Matrix-Sortierer kann mindestens eine Messvorrichtung angeordnet sein, welche ausgebildet ist, die Parameter, vorzugsweise das Gewicht und/oder die Grösse, der in den Matrix-Sortierer einfahrenden Transporteinheiten und/oder Waren zu ermitteln und der Steuerung zu übermitteln.

Die Logistikanlage kann weiterhin eine Datenbank aufweisen, in welcher die Parameter, vorzugsweise das Gewicht und/oder die Grösse, der in den Matrix-Sortierer einfahrenden Transporteinheiten und/oder Waren, hinterlegt sind.

Der Matrix-Sortierer kann eine Mehrzahl von Sortierstufen und eine Mehrzahl von Matrixförderern umfassen, welche jeweils einer Sortierstufe oder zwei Sortierstufen zugeordnet sind. Die Steuerung ist typischerweise derart ausgelegt, die Fördergeschwindigkeit jedes Matrixförderers individuell zu steuern.

In der Logistikanlage können auch Batchpuffer verwendet werden, wie sie in der EP3575243A1 der Anmelderin in den Patenansprüchen 9 bis 18 offenbarte werden.

Neben dem Matrix Sortierer, kann die Logistikanlage auch einen Zwischenspeicher umfassen. Dieser ist üblicherweise vor oder nach dem Batchpuffer angeordnet.

Der wenigstens eine Zwischenspeicher weist typischerweise einen dynamischen Speicher zur Zwischenspeicherung der für die Kommissionierung bereitgestellten Waren/Stückgüter und einen dem dynamischen Speicher nachgeschalteten Abrufspeicher zum Speichern von aus dem dynamischen Speicher ausgespeicherten und dabei vorsortierten Waren auf.

Der dynamische Speicher und der Abrufspeicher können innerhalb eines gemeinsamen Umlaufförderers angeordnet sein und über den gemeinsamen Umlaufförderer miteinander in Verbindung stehen.

Der Umlaufförderer ist typischerweise ein Förderer, mit welchem die Waren in einem geschlossenen Umlauf bzw. Kreislauf gefördert werden können. An verschiedenen Stellen des Umlaufförderers können dabei betätigbare oder schaltbare Weichen vorgesehen werden.

Die Weichen ermöglichen ein gezieltes Einfahren von neuen Waren in den Umlauf bzw. ein Ausfahren von im Umlauf zirkulierenden Waren. Die Waren sind dabei in Transporteinheiten, vorzugsweise in Form von Hängetaschen unterteilt, die jeweils für sich bewegt und dem Umlauf zugefügt bzw. dem Umlauf entnommen werden können.

Die im Umlauf zirkulierenden und im dynamischen Speicher abgelegten Waren liegen in einer bestimmten Reihenfolge vor, die sich meist nach dem zeitlich gestaffelten Ausspeichern der Waren aus dem Warenlager richtet, nicht jedoch den durch die Aufträge bestimmten Warenzusammenstellungen ("Batches") entspricht.

Durch eine Vorsortierung der Waren im Abrufspeicher werden die Waren bereits in einer den Aufträgen entsprechenden Zusammenstellung zusammengefasst, sodass ein nachfolgender Matrixsortierer oder eine Kommissionieranlage von Sortierungsarbeit entlastet und entsprechend kleiner dimensioniert oder ganz eingespart werden kann.

In der Logistikanlage können auch Zwischenspeicher verwendet werden, wie sie in der WO2019016120 der Anmelderin auf den Seiten 11 und 12 offenbart werden.

Ein erfindungsgemässes Verfahren zum Transport und dem Verteilen von Stückgütern umfasst zumindest die nachfolgenden Verfahrensschritte:
- Bereitstellen einer Anfördervorrichtung umfassend einen Hängeförderer zum Anfördern der Stückgüter sowie eine Abgabestation;
- Bereitstellen einer Abfördervorrichtung zum Abfördern der angeförderten Stückgüter, die einen ersten Förderer und einen zweiten Förderer umfasst;
- Anfördern der Stückgüter mittels des Hängeförderers und Abgeben der Stückgüter vom Hängeförderer mittels der Abgabestation an die Abfördervorrichtung;
- Übergeben und Verteilen des jeweiligen Stückguts an einer Verteilstelle der Abfördervorrichtung an den ersten Förderer in einer oberen Ebene oder an einen zweiten Förderer in einer unteren Ebene oder Verteilen des jeweiligen Stückguts an der Verteilstelle vom ersten Förderer an den zweiten Förderer;
- Abfördern der Stückgüter mittels des ersten Förderers in der ersten Förderrichtung oder mittels des zweiten Förderers in der zweiten Förderrichtung;

Der erste Förderer kann entlang der ersten Förderrichtung horizontal verfahrbar und/oder um die erste Förderrichtung vertikal verstellbar sein und in einem ersten Zustand im Bereich der Verteilstelle den zweiten Förderer überdecken und in einem zweiten Zustand im Bereich der Verteilstelle den zweiten Förderer freigeben.

Im ersten Zustand können die Stückgüter im Bereich der Verteilstelle an den ersten Förderer übergeben werden und mittels des ersten Förderers abgefördert und an mindestens eine erste nachgelagerte Vorrichtung übergeben werden.

Im zweiten Zustand können die Stückgüter im Bereich der Verteilstelle an den zweiten Förderer oder vom ersten Förderer an den zweiten Förderer übergeben und mittels des zweiten Förderers abgefördert und an mindestens eine zweite nachgelagerte Vorrichtung übergeben werden.

### LISTE DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: eine exemplarische Ausführungsvariante der Kommissionieranlage, umfassend eine Anfördervorrichtung und eine Abfördervorrichtung;
- Fig. 2: eine erste Ausführungsvariante der Anfördervorrichtung und der Abfördervorrichtung im ersten Zustand;
- Fig. 3: die erste Ausführungsvariante der Anfördervorrichtung und der Abfördervorrichtung im zweiten Zustand;
- Fig. 4: eine zweite Ausführungsvariante der Anfördervorrichtung und der Abfördervorrichtung im ersten Zustand;
- Fig. 5: die zweite Ausführungsvariante der Anfördervorrichtung und der Abfördervorrichtung im zweiten Zustand;
- Fig. 6: eine dritte Ausführungsvariante der Anfördervorrichtung und der Abfördervorrichtung im ersten Zustand;
- Fig. 7: die dritte Ausführungsvariante der Anfördervorrichtung und der Abfördervorrichtung im zweiten Zustand;
- Fig. 8: eine schematische Darstellung einer Ausführungsvariante der Logistikanlage;
- Fig. 9: eine weitere schematische Darstellung der Logistikanlage.

### BESCHREIBUNG DER AUSFÜHRUNGSVARIANTEN

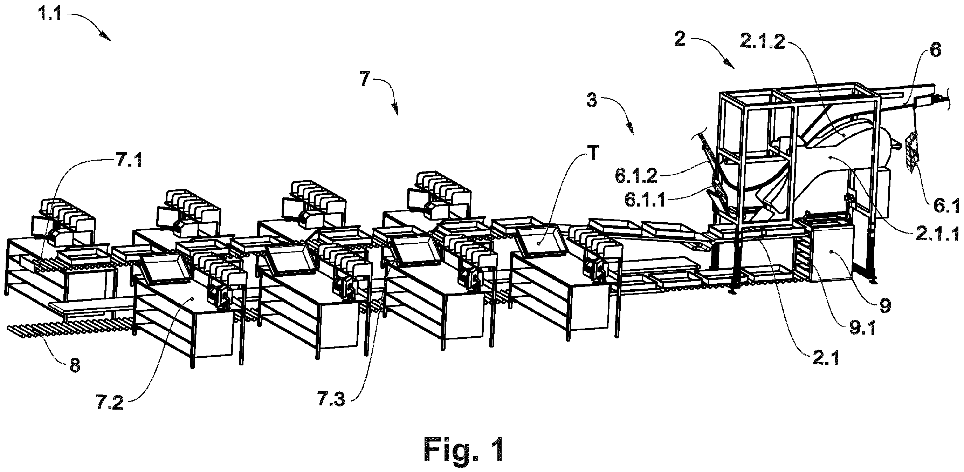

**Figur 1** zeigt eine exemplarische Ausführungsvariante der Kommissionieranlage 1.1, die eine Anfördervorrichtung 2 und eine Abfördervorrichtung 3 umfasst. Die gezeigte Kommissionieranlage 1.1 zum Transport und dem Verteilen von Stückgütern umfasst eine Anfördervorrichtung 2 mit einer Abgabestation 2.1.1 zum Anfördern der Stückgüter und eine stromabwärts der Anfördervorrichtung 2 angeordnete Abfördervorrichtung 3.

Die gezeigte Anfördervorrichtung 2 zum Anfördern der Stückgüter umfasst zudem einen Anförderer 2.1 der in einer Anförderrichtung angeordnet ist. Die gezeigte Anfördervorrichtung 2 ist als Abgabestation 2.1.1 ausgeführt und weist eine Rutsche 2.1.2 und einen als Bandförderer ausgeführten umlaufender Anförderer 2.1 auf.

In der gezeigten Ausführungsvariante umfasst die Kommissionieranlage 1.1 weiterhin einen Hängeförderer 6, mittels dem die Stückgüter in Hängetaschen 6.1 hängend förderbar sind. Der gezeigte Hängeförderer 6 schliesst an die Anfördervorrichtung 2 an, deren Abgabestation 2.1.1 in Form einer Entleerungsvorrichtung ausgeführt ist.

Der gezeigte Hängeförderer 6 verbindet hierbei die Anfördervorrichtung 2 mit stromaufwärts angeordneten Vorrichtungen der Kommissionieranlage 1.1, zwischen Anlieferung und Abtransport innerhalb der Logistikanalage und ermöglicht hierdurch den Warenfluss hin zu der der Kommissionieranlage 1.1.

Die gezeigte Entleerungsvorrichtung 2.1.1 umfasst ein umlaufendes Förderband zur Übernahme der in den Hängetaschen 6.1 transportierten Stückgütern. An einem Kontaktabschnitt sind der Förderweg des Hängeförderers und der Förderweg des Förderbands derart zueinander angeordnet, dass der Abstand des Förderwegs des Hängeförderers 6 und des Förderwegs des Förderbands kontinuierlich kleiner wird, so dass bei der Förderung einer Hängetasche 6.1 entlang des Kontaktabschnitts eine Vorderseite der Hängetsche 6.1 das Förderband kontaktiert und auf diesem zu liegen kommt und dabei die Hängetasche 6.1 nach hinten geschwenkt wird.

In einem Übergabeabschnitt kann der Förderweg des Fördersystems und der Förderweg des Förderbands im Wesentlichen parallel zueinander mit einem gewissen Gefälle nach unten verlaufen, und die Vorderseite der jeweiligen Hängetasche 6.1 bei der Förderung entlang des Übergabeanschnitts weiterhin auf dem Förderband liegen, so dass die Öffnung 6.1.1 der Hängetasche 6.1 schräg nach unten orientiert ist, und in der Hängetasche vorhandene Stückgüter aus der Hängetasche 6.1 auf das Förderband gleiten.

In einem Trennabschnitt wird der Abstand des Förderwegs des Hängeförderers 6 und des Förderwegs des Förderbands kontinuierlich grösser, so dass bei der Förderung der jeweiligen Hängetasche 6.1 entlang des Trennabschnitts die entleerte Hängetasche 6.1 vom Förderband abgehoben wird und in die frei hängende Lage zurück schwenkt. Üblicherweise ist die Fördergeschwindigkeiten des Förderbandes und die des Hängeförderers 6 gleich.

Das Förderband weist eine Mehrzahl von entlang dem Umfang des Förderbands gleichmässig beabstandet angeordnete, nach aussen gerichteter, transversaler Rippen aufweisen. Die relative Lage der Rippen und der Hängetaschen 6.1 ist zueinander so gewählt, dass im Kontaktabschnitt eine Rippe zur Hängetasche aufholt, den Bodenabschnitt der Hängetasche 6.1 kontaktiert und diesen in Förderrichtung nach vorne schiebt, bis die Hängetasche in einen Zustand zum Entleeren übergegangen ist.

Die Hängetaschen 6.1 sind mittels der Abgabestation 2.1.1 auf den Anförderer 2.1 entleerbar und von diesem sind die die Stückgüter an die Abfördervorrichtung 3 übergebbar. Die Hängetasche 6.1 ist hierbei über die Öffnung 6.1.1 entleerbar. In der gezeigten Ausführungsvariante ist die Öffnung 6.1.1 bezüglich der Aufhängung 6.1.2 der Hängetasche 6.1 oben angeordnet, alternativ kann diese jedoch auch seitlich oder unten an der jeweiligen Hängetasche 6.1 angeordnet sein.

Die gezeigte Abfördervorrichtung 3 dient dem wahlweisen Abfördern der angeförderten Stückgüter an eine erste nachgelagerte Vorrichtung oder eine zweite nachgelagerte Vorrichtung. In der gezeigten Ausführungsvariante umfasst die erste nachgelagerte Vorrichtung eine Versandstation 7.

Diese umfasst mehrere entlang des Förderers 7.1 seitlich angeordnete Versandplätze 7.2. Das jeweilige Stückgut ist vorzugsweise über Rampen 7.3 an einen jeweiligen Versandplatz 7.2 zuführbar.

Die von der Anfördervorrichtung 2 angeförderten Stückgüter sind entweder lose oder wie gezeigt, jeweils in Transportbehältnisse T übergebbar. Mittels eines Rückförderers 8 werden nach erfolgter Abgabe und Verpackung des jeweiligen Stückguts die entleerten Transportbehältnisse T mittels des Rückförderers 8 wieder zurück zur Anfördervorrichtung 2 und/oder der zur Abfördervorrichtung 3 transportiert.

Die gezeigte Kommissionieranlage 1.1 umfasst weiterhin ein Magazin 9, mittels dem die Transportbehältnisse T, welche mittels des Rückförderers 8 zurück zur Anfördervorrichtung 2 und/oder zu der Abfördervorrichtung 3 transportiert wurden, vertikal transportierbar sind, vorzugsweise mittels einer Hubeinrichtung 9.1.

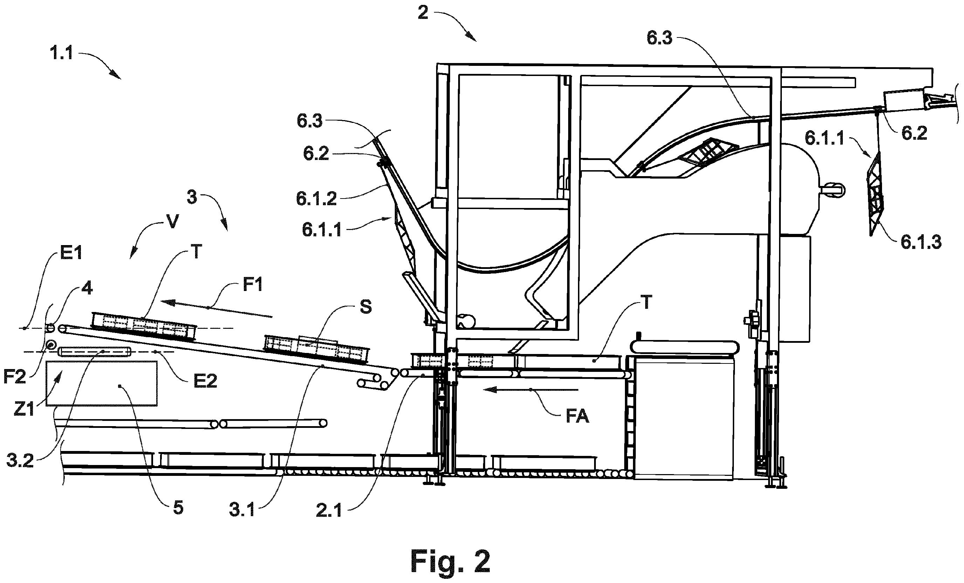

**Figur 2** zeigt eine erste Ausführungsvariante der Anfördervorrichtung 2 und eine Abfördervorrichtung 3 im ersten Zustand. Die gezeigte Abfördervorrichtung 3 umfasst einen ersten Förderer 3.1 und einen zweiten Förderer 3.2, wobei an einer Verteilstelle V der erste Förderer 3.1 in einer oberen Ebene E1 und der zweite Förderer 3.2 in einer unteren Ebene E2 angeordnet ist. Die Verteilstelle V dient dem Aufteilen von Stückgütern S oder Warengruppen. Mittels der Abfördervorrichtung 3 kann hierdurch zwischen B2B und B2C Sendungen umgestellt werden.

Nach dem Entleeren der Hängetaschen mittels der Öffnung 6.1.1, werden die an der Aufhängung 6.1.2 hängenden Hängetaschen abgeführt und das entleerte Stückgut S in ein Transportbehältnis T übergeben. Dieses Transportbehältnis T wird in der Anförderrichtung FA zum ersten Förderer 3.1 transportiert.

Der gezeigte erste 3.1 und der zweite 3.2 Förderer sind jeweils als umlaufende Förderer, beispielsweise als Rollen-, Band-, Platten-, Ketten- oder Schalenförderer ausgeführt. Die Stückgüter S sind von der gezeigten Anfördervorrichtung 2, in der gezeigten Ausführungsvariante mittels des Anförderer 2.1, an den ersten Förderer 3.1 der Abfördervorrichtung 3 übergebbar und werden mittels des ersten Förderers 3.1 in einer ersten Förderrichtung F1 an die nachgelagerte Versandstation abgefördert.

In der gezeigten Ausführungsvariante bedient der erste Förderer 3.1 eine erste nachgelagerte Vorrichtung in Form einer Versandstation, die mehrere entlang eines Förderers seitlich angeordnete Versandplätze umfasst. B2C Stückgüter oder Warengruppen können mittels des ersten Förderers 3.1 an die Versandplätze gefördert werden und dort für den jeweiligen Endkunden einzeln verpackt werden.

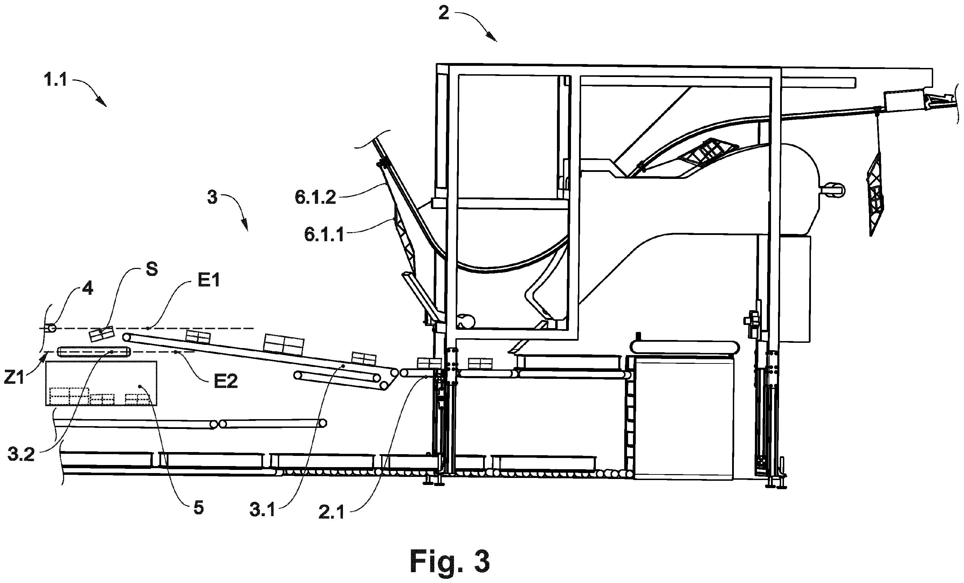

In dem gezeigten ersten Zustand wird der zweite Förderer 3.2, der in der unteren Ebene E2 angeordnet ist und in der zweiten Förderrichtung F2 orthogonal zur ersten Förderrichtung F1 fördert, vom ersten Förderer 3.1 überdeckt. Und nicht bedient
**Figur 3** zeigt die erste Ausführungsvariante der Anfördervorrichtung 2 und der Abfördervorrichtung 3 im zweiten Zustand Z2. Im zweiten Zustand Z2 ist der erste Förderer 3.1 im Bereich der Verteilstelle V typischerweise entlang der ersten Förderrichtung F1 verfahren und gibt hierdurch den zweiten Förderer 3.2 frei.

Die Stückgüter S werden wie gezeigt von der Anfördervorrichtung 2 an den ersten Förderer 3.1 und von diesem an den zweiten Förderer 3.2 übergeben. Im gezeigten zweiten Zustand Z2 werden die Stückgüter S von der gezeigten Anfördervorrichtung 2 somit ebenfalls zuerst an den ersten Förderer 3.1 übergeben und in der ersten Förderrichtung F1 abgefördert und dann vom ersten Förderer 3.1 an den zweiten Förderer 3.2 übergeben und in der zweiten Förderrichtung F2 abgefördert.

Der gezeigte zweite Förderer 3.2 bedient in der gezeigten Ausführungsvariante eine zweite nachgelagerte Vorrichtung 5 in Form einer weiteren Versandstation. Hierbei werden Stückgüter für den B2B Versand zu Warengruppen zusammengestellt, indem die Stückgüter S in einem Transportbehältnis T, beispielsweise einer Wanne, einer Palette oder einem Sack als gesammelte Warensendung für einen Grossabnehmer bereitgestellt werden.

Der erste 3.1 und/oder der zweite 3.2 Förderer können beschleunig oder abbremsbar sein um die darauf liegenden Stückgüter S zu beabstanden, sodass diese taktgenau an die erste 4 oder zweite 5 nachgelagerter Vorrichtung übergebbar sind.

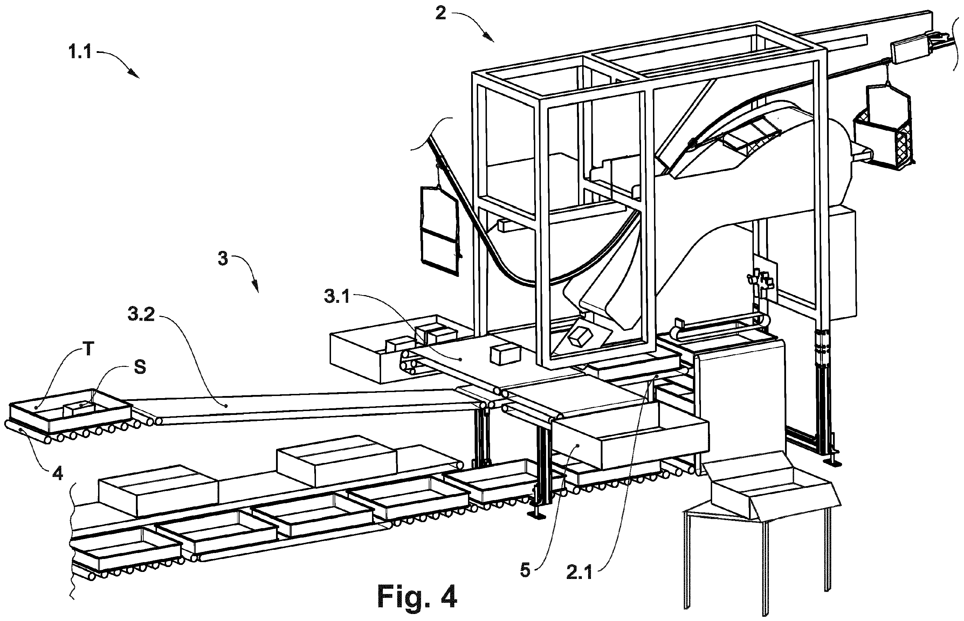

**Figur 4** zeigt eine zweite Ausführungsvariante der Anfördervorrichtung 2 und eine Abfördervorrichtung 3 im ersten Zustand. Wie zu sehen ist, können die erste 4 und die zweite 5 nachgelegte Vorrichtung auch vertauscht angeordnet sein oder der erste Förderer 3.1 bedient die zweite nachgelagerte Vorrichtung 5, wie von Figur 4 gezeigt.

In der gezeigten Ausführungsvariante bedient der erste Förderer 3.1 die zweite nachgelagerte Vorrichtung 5 und der zweite Förderer 3.2 die erste nachgelagerte Vorrichtung 4. Die zweite Förderrichtung F2 verläuft in der gezeigten Ausführungsvariante orthogonal zur ersten Förderrichtung F1.

Der erste Förderer 3.1 umfasst zwei zueinander gegenläufig umlaufende Querbänder, die jeweils orthogonal zur Förderrichtung des zweiten Förderers 3.2 verfahrbar angeordnet sind. Der zweite Förderer 3.2 umfasst ein Teleskopband, welches in der zweiten Förderrichtung umläuft und im Bereich der Verteilstelle verfahrbar angeordnet ist. Alternativ kann das Förderband des zweiten Förderers 3.2 auch bezüglich der oberen Ebene vertikal verstellbar, vorzugsweise verklappbar, angeordnet sein.

Die zwei in der ersten Förderrichtung umlaufenden Querbänder des ersten Förderers 3.1 sind entlang der ersten Förderrichtung bezüglich dem zweiten Förder asymmetrisch verfahrbar angeordnet. Im gezeigten ersten Zustand Z1 werden die Stückgüter S im Bereich der Verteilstelle an den ersten Förderer 3.1 übergeben und mittels der gegenläufigen Querförderer an die seitlich angeordneten Transportbehältnisse 5 übergeben.

Hierbei wird das angeförderte Stückgut S jeweils dem Querförderband zugeführt, zu dessen Seite das Stückgut S abgeführt werden soll. Die Transportbehältnisse 5 sind lateral bezüglich des zweiten Förderers 3.2 angeordnet.

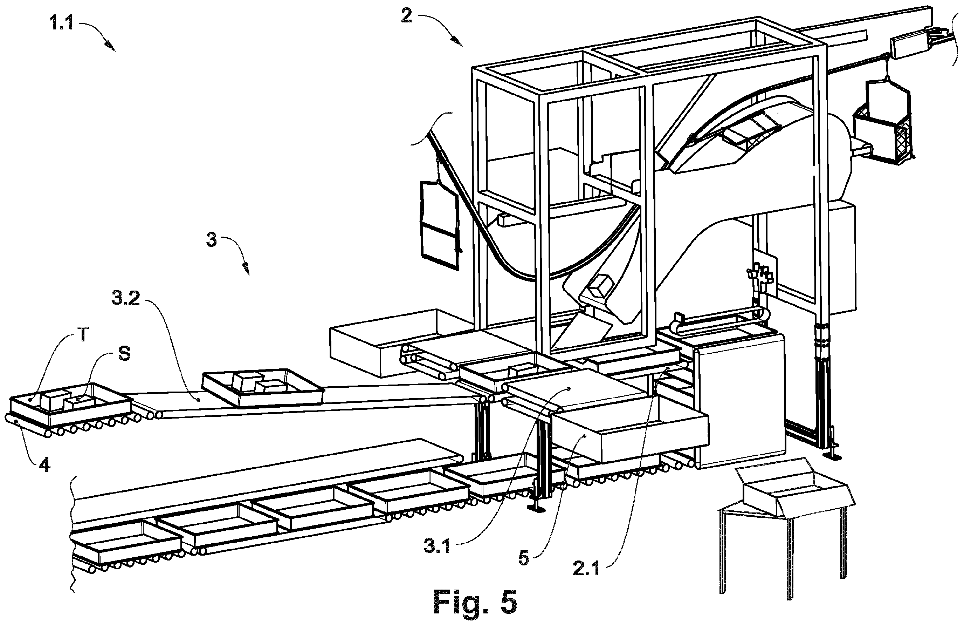

**Figur 5** zeigt die zweite Ausführungsvariante der Anfördervorrichtung 2 und der Abfördervorrichtung 3 im zweiten Zustand. Die zwei in der ersten Förderrichtung umlaufenden Querbänder sind entlang der Förderrichtung F2 bezüglich des zweiten Förderers 3.2 verfahren um den zweiten Förderer 3.2 freizugeben.

Im gezeigten zweiten Zustand sind die beiden Querbänder des ersten Förderers 3.1 lateral verfahren und geben hierdurch den zweiten Förderer 3.2 frei. Somit können die Stückgüter S im Bereich der Verteilstelle an den zweiten Förderer 3.2 übergeben und mittels diesem an die erste nachgelagerte Vorrichtung 4 übergeben werden.

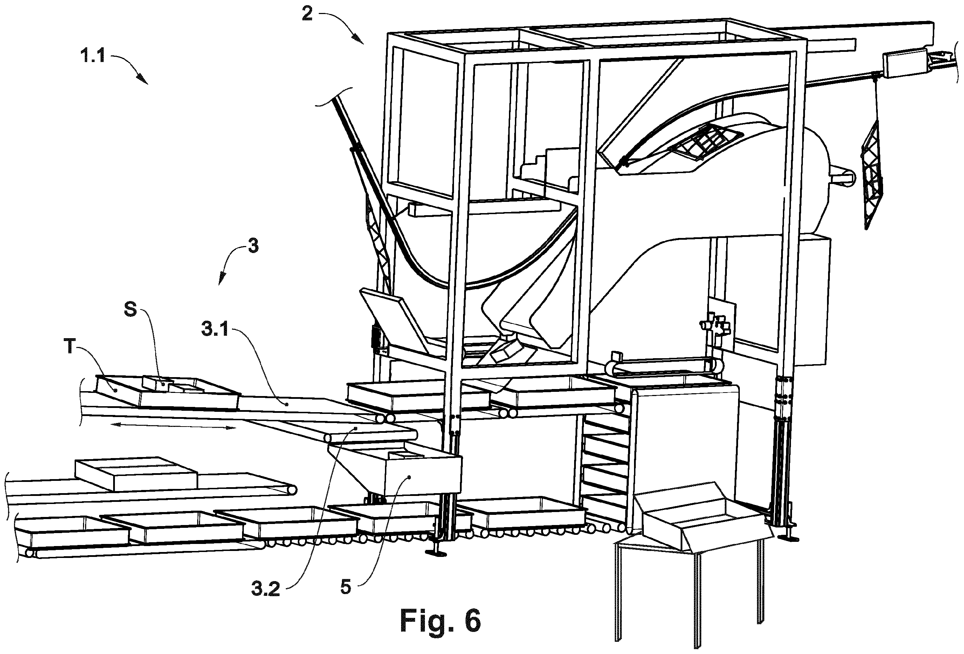

**Figur 6** zeigt eine dritte Ausführungsvariante der Anfördervorrichtung 2 und der Abfördervorrichtung 3 im ersten Zustand. Der erste Förderer 3.1 kann hierbei um die erste Förderrichtung vertikal verstellt werden, vorzugsweise geklappt oder geschwenkt werden.

Im gezeigten ersten Zustand überdeckt der erste Förderer 3.1 im Bereich der Verteilstelle den zweiten Förderer 3.2. Die Stückgüter S werden im Bereich der Verteilstelle an den ersten Förderer 3.1 übergeben und mittels des ersten Förderers 3.1 abgefördert und an die erste nachgelagerte Vorrichtung übergeben.

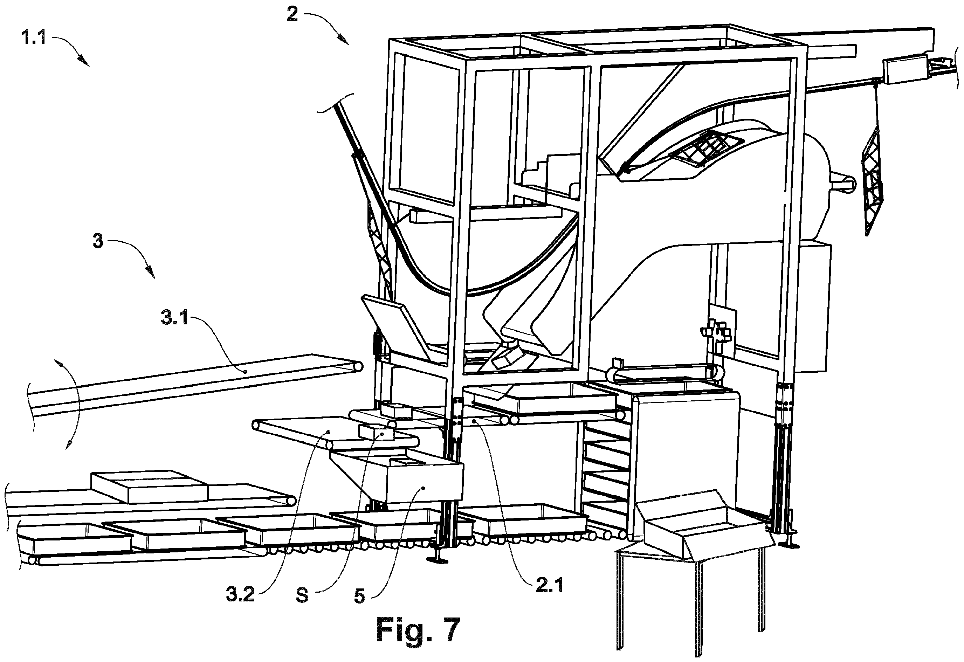

**Figur 7** zeigt die dritte Ausführungsvariante der Anfördervorrichtung 2 und der Abfördervorrichtung 3 im zweiten Zustand. Der erste Förderer 3.1 ist zum Freigeben des zweiten Förderers 3.2 um die erste Förderrichtung F1 nach oben geklappt oder geschwenkt angeordnet.

Im Bereich der Verteilstelle werden die Stückgüter S somit von der Anfördervorrichtung 2 direkt an den zweiten Förderer 3.2 übergeben und mittels dem als Querband ausgeführten zweite Förderer 3.2 abgefördert und an die zweite nachgelagerte Vorrichtung 5 übergeben.

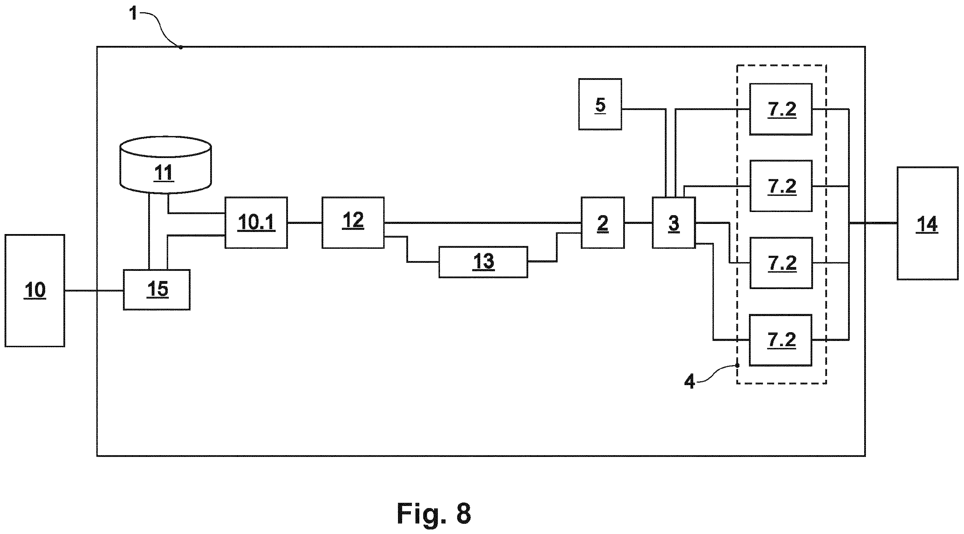

**Figur 8** zeigt eine schematische Übersicht einer Logistikanlage 1 von der Warenanlieferung zur Warenablieferung. Bevor die Stückgüter S an die Anfördervorrichtung 2 übergeben werden, durchlaufen diese in der Logistikanlage 1 der Kommissionieranlage vorgelagerte Kommissionierschritte.

Die Logistikanlage 1 weist hierzu neben der An- und Abfördervorrichtung noch weitere Vorrichtungen und Anlagen auf. Die Stückgüter werden eingangsseitig angeliefert, beispielsweise mittels eines LKWs.

Nach dem Entladen werden die Waren typischerweise folgendermassen durch die folgenden Bereiche der Logistikanlage 1 transportiert: Anlieferung über eine Anlieferstation 10 und Durchlauf durch die Warenannahme 15.

Einlagern in mindestens einer Lagervorrichtung 11, Aufgaben der Waren an mindestens einer Aufgabestation 10.1, typischerweise in einen Hängeförderer, Sortieren in mindestens einer Sortiervorrichtung 12 und Speichern in mindestens einer Speichervorrichtung 13 sowie daran anschliessend das Verteilen über die Anfördervorrichtung 2 und die Abfördervorrichtung 3.

Mittels der Abfördervorrichtung 3 werden die Waren zwischen der ersten nachgelagerten Vorrichtung 4 und der zweiten nachgelagerten Vorrichtung 5 verteilt und an mindestens einer Versandplätzen 7.2 für den daran anschliessenden Versand über mindestens eine Abtransportstation 14 vorbereitet, welcher Abtransport ebenfalls typischerweise wieder per LKW erfolgt.

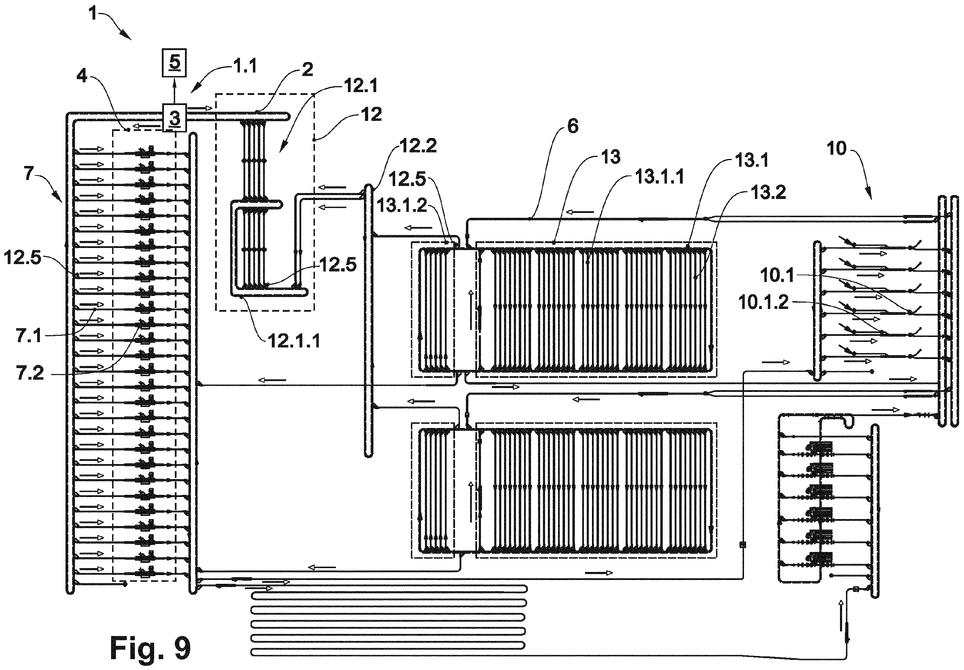

**Figur 9** zeigt eine weitere schematische Übersicht der Logistikanlage 1. Zum Befüllen der Hängetaschen nach der Anlieferung, weist die Logistikanlage 1 eine Anlieferstation 10 mit Aufgabestationen 10.1 und Befüllvorrichtungen 10.1.2 zum Befüllen der Hängetaschen auf. Die Hängetaschen sind im unbefüllten Zustand bereits an dem Hängeförderer mittels Laufwagen angeordnet.

Zum Befüllen werden die Hängetaschen gedreht wobei mittels einer Wirkanordnung die Transportelemente an einer bestimmten Stelle des Förderwegs um einen bestimmten Drehwinkel gedreht werden können, so dass ein Aufhängehaken an der Aufhängung der Hängetasche von der ersten Position in eine zweite Position beziehungsweise von der zweiten Position in die erste Position überführbar ist.

Es können weitere Öffnungsmittel vorgesehen sein, mit welchen die Hängetasche an einer bestimmten Stelle des Förderwegs in den ersten geöffneten Zustand gebracht werden kann, wobei sich dabei der Aufhängehaken in der zweiten Position befindet und die Rückwand der Transporttasche im Wesentlichen parallel zur Förderrichtung orientiert ist.

Zum Speichern und Sortieren der Stückgüter innerhalb der Logistikanlage 1, weisst die gezeigte Logistikanlage 1 einen Batchpuffer 11.1 zur Bereitstellung von zu Batches zusammengestellten Stückgüter S auf.

Weiterhin umfasst die gezeigte Logistikanalage 1 einen Matrix- Sortierer 12.1 zum batchweisen Sortieren der Stückgüter S auf, der eine Mehrzahl von Transporteinheiten, welche jeweils eine Aufnahmeeinheit, vorzugsweise in Form einer Hängetasche umfassen, zur Aufnahme der Stückgüter S aufweisen.

Der Matrix-Sortierer 12.1 umfasst typischerweise mindestens einen Matrixförderer 12.1.1 zum Fördern der Transporteinheiten, wobei die Logistikanlage 1 eine Steuerung aufweist, welche ausgelegt ist, die Fördergeschwindigkeit des Matrixförderers 12.1.1 dynamisch zu steuern.

Die Fördergeschwindigkeit wird abhängig von mindestens einem Parameter, beispielsweise Grösse und/oder Gewicht, der geförderten Transporteinheiten und/oder Stückgüter gesteuert.

Der Batchpuffer 11.1 kann neben dem Matrix Förderer 2.1.1 weitere Förderer, vorzugsweise Umlaufförderer 12.2, aufweisen, welche ausgelegt sind, die Transporteinheiten mit einer konstanten Fördergeschwindigkeit zu fördern.

Die Steuerung kann dazu ausgelegt sein, die Fördergeschwindigkeit des Matrixförderers 12.1.1 derart zu steuern, dass die Fördergeschwindigkeit des Matrixförderers 12.1.1 in mindestens einem Batch höher als die konstante Fördergeschwindigkeit der weiteren Förderer ist.

Der Umlaufförderer 12.2 ist typischerweise dazu ausgelegt, die Transporteinheiten in einer Sortierstufe zu- und/oder von einer Sortierstufe wegzuführen. Eine Sortierstufe des Matrix-Sortierers 12.1 kann eine Mehrzahl von linearen Pufferstrecken 12.3 aufweisen.

Die linearen Pufferstrecken 12.3 sind durch Weichen 12.5 mit dem Matrixförderer 12.1.1 verbunden sind, wobei die Pufferstrecken 12.3 vorzugsweise als Gravitationsstrecken mit einem Gefälle derart ausgebildet sind, dass die Transporteinheiten in den Gravitationsstrecken schwerkraftbedingt förderbar sind.

Der Batchpuffer 11.1 weist zudem eine Mehrzahl von linearen Speicherstrecken 13.2 auf, in welche vorzugsweise jeweils ein Batch oder zwei Batches einspeicherbar sind.

Vor dem Matrix-Sortierer 12.1 kann mindestens eine Messvorrichtung angeordnet sein, welche ausgebildet ist, die Parameter, vorzugsweise das Gewicht und/oder die Grösse, der in den Matrix-Sortierers 12.1 einfahrenden Transporteinheiten und/oder Waren zu ermitteln und der Steuerung zu übermitteln.

Die Logistikanlage 1 kann weiterhin eine Datenbank aufweisen, in welcher die Parameter, vorzugsweise das Gewicht und/oder die Grösse, der in den Matrix-Sortierer 12.1 einfahrenden Transporteinheiten und/oder Waren, hinterlegt sind.

Der Matrix-Sortierer 12.1 umfasst eine Mehrzahl von Sortierstufen und eine Mehrzahl von Matrixförderern 12.1, welche jeweils einer Sortierstufe oder zwei Sortierstufen zugeordnet sind. Die Steuerung kann die Fördergeschwindigkeit jedes Matrixförderers 12.1 individuell steuern.

Neben dem Matrix Sortierer 12.1, kann die Logistikanlage 1 auch einen Zwischenspeicher 13.1 umfassen. Der wenigstens eine Zwischenspeicher 13.1 weist typischerweise einen dynamischen Speicher 13.1.1 zur Zwischenspeicherung der für die Kommissionierung bereitgestellten Waren und einen dem dynamischen Speicher 13.1.1 nachgeschalteten Abrufspeicher 13.1.2 zum Speichern von aus dem dynamischen Speicher 13.1.1 ausgespeicherten und dabei vorsortierten Waren auf.

Der dynamische Speicher 13.1.1 und der Abrufspeicher 13.1.2 können innerhalb eines gemeinsamen Umlaufförderers 12.2 angeordnet sein und über den gemeinsamen Umlaufförderer 12.2 miteinander in Verbindung stehen. Der Umlaufförderer 12.2 ist typischerweise ein Förderer, mit welchem die Waren in einem geschlossenen Umlauf bzw. Kreislauf gefördert werden können.

An verschiedenen Stellen des Umlaufförderers 12.2 können dabei betätigbare oder schaltbare Weichen 12.5 vorgesehen werden, welche ein gezieltes Einfahren von neuen Waren in den Umlauf bzw. ein Ausfahren von im Umlauf zirkulierenden Waren ermöglichen. Die Waren sind dabei in Transporteinheiten unterteilt, die jeweils für sich bewegt und dem Umlauf zugefügt bzw. dem Umlauf entnommen werden können.

Die im Umlauf zirkulierenden und im dynamischen Speicher 13.1.1 abgelegten Waren liegen in einer bestimmten Reihenfolge vor, die sich meist nach dem zeitlich gestaffelten Ausspeichern der Waren aus dem Warenlager richtet, nicht jedoch den durch die Aufträge bestimmten Warenzusammenstellungen ("Batches") entspricht.

Durch eine Vorsortierung der Waren im Abrufspeicher 13.1.2 werden die Waren bereits in einer den Aufträgen entsprechenden Zusammenstellung zusammengefasst, sodass ein nachfolgender Matrixsortierer 12.1 von Sortierungsarbeit entlastet und entsprechend kleiner dimensioniert oder ganz eingespart werden kann.

## Patentansprüche

1. Kommissionieranlage (1.1) zum Transport und dem Verteilen von Stückgütern (S) umfassend
a. eine Anfördervorrichtung (2) umfassend einen Hängeförderer (6) zum Anfördern der Stückgüter (S) sowie eine Abgabestation (2.1.1) zum Abgeben der Stückgüter (S) vom Hängeförderer (6) an
b. eine Abfördervorrichtung (3) zum Abfördern der angeförderten Stückgüter (S), die einen ersten Förderer (3.1) und einen zweiten Förderer (3.2) umfasst, wobei an einer Verteilstelle (V) der erste Förderer (3.1) in einer oberen Ebene (E1) und der zweite Förderer (3.2) in einer unteren Ebene (E2) angeordnet ist, wobei
c. die Stückgüter (S) an den ersten Förderer (3.1) übergebbar und in einer ersten Förderrichtung (F1) abförderbar oder an den zweiten Förderer (3.2) übergebbar und in einer zweiten Förderrichtung (F2) abförderbar sind.

2. Kommissionieranlage (1.1) nach Anspruch 1, **wobei** der erste Förderer (3.1) entlang der ersten Förderrichtung (F1) horizontal verfahrbar und/oder um die erste Förderrichtung (F1) vertikal verstellbar, vorzugsweise klappbar oder verschwenkbar, angeordnet ist und
a. in einem ersten Zustand (Z1) im Bereich der Verteilstelle (V) den zweiten Förderer (3.2) überdeckt und
b. in einem zweiten Zustand (Z2) im Bereich der Verteilstelle (V) den zweiten Förderer (3.2) freigibt.

3. Kommissionieranlage (1.1) nach Anspruch 1 oder 2, **wobei**
a. im ersten Zustand (Z1) die Stückgüter (S) im Bereich der Verteilstelle (V) an den ersten Förderer (3.1) übergebbar sind und mittels des ersten Förderers (3.1) abförderbar und an mindestens eine erste nachgelagerte Vorrichtung (4) übergebbar sind, oder
b. im zweiten Zustand (Z2) die Stückgüter (S) im Bereich der Verteilstelle (V) an den zweiten Förderer (3.2) oder vom ersten Förderer (3.1) an den zweiten Förderer (3.2) übergebbar sind und mittels des zweiten Förderers (3.2) abförderbar und an mindestens eine zweite nachgelagerte Vorrichtung (5) übergebbar sind.

4. Kommissionieranlage (1.1) nach einem der vorhergehenden Ansprüche, **wobei** die zweite Förderrichtung (F2) gegenläufig oder orthogonal zur ersten Förderrichtung (F1) verläuft.

5. Kommissionieranlage (1.1) nach einem der vorhergehenden Ansprüche, **wobei** der erste Förderer (3.1) ein Teleskopband (3.1.1) umfasst, welches in der ersten Förderrichtung (F1) umläuft und entlang der ersten Förderrichtung (F1) im Bereich der Verteilstelle (V) verfahrbar angeordnet ist oder bezüglich der oberen Ebene (E1) vertikal verstellbar, vorzugsweise verklappbar, angeordnet ist.

6. Kommissionieranlage (1.1) nach einem der Ansprüche 1 bis 5, **wobei** der erste Förderer (3.1) zwei in der ersten Förderrichtung (F1), vorzugsweise zueinander gegenläufig, umlaufende Querbänder (3.2.1 a, b) umfasst, die jeweils entlang der ersten Förderrichtung (F1) verfahrbar angeordnet sind.

7. Kommissionieranlage (1.1) nach Anspruch 6, **wobei** die zwei in der ersten Förderrichtung (F1) umlaufenden Querbänder (3.2.1 a, b) entlang der ersten Förderrichtung (F1) bezüglich des zweiten Förderers (3.2) asymmetrisch verfahrbar angeordnet sind.

8. Kommissionieranlage (1.1) nach einem der vorhergehenden Ansprüche, **wobei** der zweite Förderer (3.2) mindestens ein Querband (3.2.1) umfasst, das gegenläufig oder orthogonal bezüglich der ersten Förderrichtung (F1) um läuft.

9. Kommissionieranlage (1.1) nach einem der vorhergehenden Ansprüche, **wobei** der erste (3.1) und/oder der zweite Förderer (3.2) beschleunig oder abbremsbar sind um die darauf liegenden Stückgüter (S) zu beabstanden, sodass diese taktgenau an die erste oder die zweite nachgelagerte Vorrichtung (4, 5) übergebbar sind.

10. Kommissionieranlage (1.1) nach einem der vorhergehenden Ansprüche, **wobei** der Hängeförderer (6) Hängetaschen (6.1) umfasst, mittels denen die Stückgüter (S) hängend förderbar sind und/oder die Abgabestation (2.1.1) eine Entleerungsvorrichtung zum Entleeren der Hängetaschen (6.1) umfasst.

11. Kommissionieranlage (1.1) nach Anspruch 10, **wobei** die Hängetaschen (6.1) mittels der Entleerungsvorrichtung entleerbar sind und das Stückgut (S) an die Abfördervorrichtung (3) übergebbar ist, wobei die Abgabestation (2.1.1) zum Übergeben vorzugsweise eine Rutsche (2.1.2) umfasst.

12. Kommissionieranlage (1.1) nach Anspruch 10 oder 11, **wobei** mittels mindestens eines Stoppelements (2.1.3) in der Abgabestation (2.1.1) die Hängetaschen (6.1) anhaltbar sind und im angehaltenen Zustand entleerbar sind oder die Hängetaschen (6.1) alternativ angetrieben im bewegten Zustand entleerbar sind.

13. Kommissionieranlage (1.1) nach Anspruch 10 bis 12, **wobei** die Hängetaschen (6.1) über eine jeweilige Öffnung (6.1.1) entleer sind, welche Öffnung (6.1.1) bezüglich einer Aufhängung (6.1.2) der Hängetasche (6.1) oben, seitlich oder unten an der jeweiligen Hängetasche (6.1) angeordnet ist.

14. Kommissionieranlage (1.1) nach einem der vorhergehenden Ansprüche, **wobei** die Kommissionieranlage (1.1) mindestens eine Versandstation (7) umfasst, die mehrere entlang eines Förderers (7.1) seitlich angeordnete Versandplätze (7.2) umfasst und ein Stückgut (S) vorzugsweise über Rampen (7.3) an einen jeweiligen Versandplatz (7.3) zuführbar ist.

15. Kommissionieranlage (1.1) nach einem der vorhergehenden Ansprüche, **wobei** die von der Anfördervorrichtung (2) angeförderten Stückgüter (S) jeweils in Transportbehältnisse (T) übergebbar sind, welche mittels eines Rückförderers (8) nach erfolgter Entleerung wieder zurück zur Anfördervorrichtung (2) und/oder der zur Abfördervorrichtung (3) transportierbar sind.

16. Kommissionieranlage (1.1) nach Anspruch 15, **wobei** die Kommissionieranlage (1.1) ein Magazin (9) umfasst, mittels dem die Transportbehältnisse (T) welche mittels des Rückförderers (8) zurück zur Anfördervorrichtung (2) und/oder zu der Abfördervorrichtung (3) transportiert wurden, vertikal transportierbar sind, vorzugsweise mittels einer Hubeinrichtung (9.1).

17. Logistikanlage (1) umfassend eine Kommissionieranlage (1.1) nach einem der Ansprüche 1 bis 16, sowie mindestens eine Lagervorrichtung (11) und/oder Sortiervorrichtung (12) und/oder Speichervorrichtung (13).

18. Verfahren zum Transport und dem Verteilen von Stückgütern (S) umfassend zumindest die nachfolgenden Verfahrensschritte:
• Bereitstellen einer Anfördervorrichtung (2) umfassend einen Hängeförderer (6) zum Anfördern der Stückgüter (S) sowie eine Abgabestation (2.1.1);
• Bereitstellen einer Abfördervorrichtung (3) zum Abfördern der angeförderten Stückgüter (S), die einen ersten Förderer (3.1) und einen zweiten Förderer (3.2) umfasst;
• Anfördern der Stückgüter (S) mittels des Hängeförderers (6) und Abgeben der Stückgüter (S) vom Hängeförderer (6) mittels der Abgabestation (2.1.1) an die Abfördervorrichtung (3);
• Übergeben und Verteilen des jeweiligen Stückguts (S) an einerVerteilstelle (V) der Abfördervorrichtung (3) an den ersten Förderer (3.1) in einer oberen Ebene (E1) oder an einen zweiten Förderer (3.2) in einer unteren Ebene (E2) oder Verteilen des jeweiligen Stückguts (S) an der Verteilstelle (V) vom ersten Förderer (3.1) an den zweiten Förderer (3.2);
• Abfördern der Stückgüter (S) mittels des ersten Förderer (3.1) in der ersten Förderrichtung (F1) oder mittels des zweiten Förderers (3.2) in einer zweiten Förderrichtung (F2);

19. Verfahren nach Anspruch 18, **wobei** der erste Förderer (3.1) entlang der ersten Förderrichtung (F1) horizontal verfahrbar und/oder um die erste Förderrichtung (F1) vertikal verstellbar ist und
a. in einem ersten Zustand (Z1) im Bereich der Verteilstelle (V) den zweiten Förderer (3.2) überdeckt und
b. in einem zweiten Zustand (Z2) im Bereich der Verteilstelle (V) den zweiten Förderer (3.2) freigibt.

20. Verfahren nach Anspruch 18 oder 19, **wobei**
a. im ersten Zustand (Z1) die Stückgüter (S) im Bereich der Verteilstelle (V) an den ersten Förderer (3.1) übergeben werden und mittels des ersten Förderers (3.1) abgefördert und an mindestens eine erste nachgelagerte Vorrichtung (4) übergeben werden, oder
b. im zweiten Zustand (Z2) die Stückgüter (S) im Bereich der Verteilstelle (V) an den zweiten Förderer (3.2) oder vom ersten Förderer (3.1) an den zweiten Förderer (3.2) übergeben und mittels des zweiten Förderers (3.2) abgefördert und an mindestens eine zweite nachgelagerte Vorrichtung (5) übergeben werden.
